# EUROPÄISCHE PATENTSCHRIFT

(11) **EP 3 817 956 B1**
(45) Veröffentlichungstag und Bekanntmachung des Hinweises auf die Patenterteilung: **04.09.2024**
(21) Anmeldenummer: 19735262.8
(22) Anmeldetag: 27.06.2019
(51) Int. Cl.: B60T 8/32, B60T 13/68, B60T 17/22, B60T 8/48

(54) **VERFAHREN ZUR STEUERUNG DER BREMSKRAFT IN EINER ELEKTROHYDRAULISCHEN BREMSANLAGE EINES KRAFTFAHRZEUGS**
METHOD FOR CONTROLLING THE BRAKING POWER IN AN ELECTROHYDRAULIC BRAKING SYSTEM OF A MOTOR VEHICLE
PROCÉDÉ DE COMMANDE DE LA FORCE DE FREINAGE DANS UN SYSTÈME DE FREINAGE ÉLECTROHYDRAULIQUE D'UN VÉHICULE AUTOMOBILE

(30) Priorität: 04.07.2018 DE 102018211051
(43) Veröffentlichungstag der Anmeldung: 12.05.2021
(73) Patentinhaber: VOLKSWAGEN AKTIENGESELLSCHAFT, 38440 Wolfsburg (DE)
(72) Erfinder: STEBNER, Frank, 38108 Braunschweig (DE); WAGNER, Tobias, 38444 Wolfsburg (DE); KÖRNER, Matthias, 38114 Braunschweig (DE)
(86) Internationale Anmeldenummer: PCT/EP2019/067104
(87) Internationale Veröffentlichungsnummer: WO 2020/007694

(56) Entgegenhaltungen:
- WO-A1-2015/044383
- DE-A1- 10 035 179
- DE-A1- 10 254 818
- DE-A1- 102015 206 918
- DE-A1- 102015 207 636

## Beschreibung

Die vorliegende Erfindung betrifft ein Verfahren zur Steuerung der Bremskraft in einer elektrohydraulischen Bremsanlage eines Kraftfahrzeugs sowie eine elektrohydraulische Bremsanlage.

Verfahren zur Steuerung der Bremskraft einer Bremsanlage eines Kraftfahrzeugs sind u.a. aus den Dokumenten DE 100 35 179 A1, WO 2015/044383 A1, DE 10 2015 207 636 A1, DE 10 2015 206 918 A1, WO 2016/146223 A2, DE 10 2013 001 775 A1 und DE 102 54 818 A1 bekannt.

Die Druckschrift WO 2016/146223 A2 betrifft eine Bremsanlage für Kraftfahrzeuge. Hierbei ist es die Aufgabe der betreffenden Druckschrift eine kostengünstige Bremsanlage mit hoher Regelgüte und Regelungsperformance bereitzustellen. Diese Aufgabe wird hierbei gelöst, indem bei der Verwendung einer lediglich minimalen Anzahl von Ventilen, Sensoren und Druckgebern sowie lediglich eines kleinen und kostengünstigen Motors als Antrieb für die Druckversorgungseinheit - durch Anwendung eines neuartigen intelligenten Multiplexverfahrens - ein weitestgehend zeitgleicher Druckabbau und Druckaufbau in unterschiedlichen Bremskreisen ermöglicht wird. Nachteilig an der genannten Bremsanlage ist, dass es bei hoher thermischer Belastung zum Sieden von Bremsflüssigkeit kommen kann, was dazu führt, dass die Bremsanlage den für das Bremsen erforderlichen Bremsdruck nicht aufbauen kann, was schließlich zum Versagen der Bremsanlage führen kann.

Die Druckschrift DE 10 2013 001 775 A1 betrifft ein Verfahren zur Steuerung der Bremskraft in einer elektrohydraulischen Bremsanlage mit einem durch ein Bremspedal zu betätigenden Hauptbremszylinder, Radbremszylindern und einem ESC-System, wobei das ESC-System eine Steuereinheit sowie eine Fremdenergieversorgung mit Hydropumpe umfasst, die den Bremsdruck an den Radbremszylindern in dem ESC-System erzeugt. Hierbei ist es die Aufgabe der genannten Druckschrift, ein Verfahren zur Steuerung der Bremskraft in einer elektrohydraulischen Bremsanlage bereitzustellen, bei dem im Falle eines Siedens von Bremsflüssigkeit einem Verlust der Bremsfähigkeit entgegengewirkt wird, indem die beim Sieden gebildeten Gasblasen schnell detektiert und durch Druckerhöhung innerhalb der Bremsanlage komprimiert werden. Auf diese Weise steht dem ESC-System wieder ein ausreichender Bremsdruck zur Verfügung. Nachteilig an dem benannten Verfahren ist allerdings, dass es einen hohen konstruktiven Aufwand erfordert und die Kompensation der verlorenen Bremskraft häufig nicht schnell genug wiederhergestellt werden kann, so dass es auch bei Ausführung des genannten Verfahrens zu Ausfällen des Bremssystems und dadurch zu schweren Unfällen kommen kann.

Es ist daher die Aufgabe der vorliegenden Erfindung, die voranstehend beschriebenen Nachteile zumindest teilweise zu beheben, insbesondere ist es die Aufgabe der vorliegenden Erfindung, eine Wiederherstellung des erforderlichen Bremsdrucks im Falle des Siedens von Bremsflüssigkeit schnell und auf konstruktiv einfache Weise zu gewährleisten.

Die voranstehende Aufgabe wird gelöst durch ein Verfahren mit den Merkmalen des Anspruchs 1 sowie eine Bremsanlage gemäß Anspruch 8. Weitere Merkmale und Details der Erfindung ergeben sich aus den Unteransprüchen, der Beschreibung und den Zeichnungen.

Die technischen Merkmale, die zu dem erfindungsgemäßen Verfahren offenbart werden, gelten dabei auch in Verbindung mit der erfindungsgemäßen Bremsanlage und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen aufgeführt.

Das erfindungsgemäße Verfahren zur Steuerung der Bremskraft in einer elektrohydraulischen Bremsanlage eines Kraftfahrzeugs kann hierbei vorzugsweise in einem Personenkraftwagen oder einem Lastkraftwagen, aber auch in einem Bagger, einem Gabelstapler oder dergleichen eingesetzt werden. Unter der Bremskraft wird im Rahmen der Erfindung die von der Bremsanlage für einen Bremsvorgang aufgewendete Kraft verstanden. Unter einem Bremsvorgang in einem Kraftfahrzeug wird ferner ein Vorgang verstanden, durch den die Geschwindigkeit des betreffenden Fahrzeugs zumindest reduziert wird.

Bei dem erfindungsgemäßen Verfahren zur Steuerung der Bremskraft in einer elektrohydraulischen Bremsanlage erfolgt zunächst eine Einleitung eines Bremsvorgangs. Ein Bremsvorgang kann hierbei durch verschiedene Betätigungsmittel, insbesondere durch ein Bremspedal initiiert werden. Hierbei kann der vom Benutzer ausgeführte Betätigungsvorgang, wie beispielsweise das Treten eines Bremspedals, vorteilhafterweise mittels einer entsprechenden Sensorik, beispielsweise einer Bremspedalsensorik erfasst werden.

Nach dem Einleiten eines Bremsvorgangs mit Hilfe eines entsprechenden Betätigungsmittels erfolgt im Rahmen des erfindungsgemäßen Verfahrens die Erfassung eines aktuellen Zustands der elektrohydraulischen Bremsanlage. Die Erfassung eines aktuellen Zustands der Bremsanlage erfolgt hierbei vorteilhafterweise im Hinblick auf den aktuellen Zustand der in der Bremsanlage eingesetzten Bremsflüssigkeit. Im Rahmen der Erfindung ist erkannt worden, dass insbesondere der Zustand der in einer Bremsanlage angeordneten Bremsflüssigkeit eine kritische Größe für den Zustand der Bremsanlage selbst darstellt. So ist jede verwendbare Bremsflüssigkeit zur Vermeidung der Aufnahme freien Wassers zwingend hygroskopisch gebildet und nimmt daher sehr begierig Wasser in gebundener Form auf. Ein entsprechender Gehalt an gebundenem Wasser in Bremsflüssigkeiten ist somit nicht zu vermeiden. Durch die Aufnahme des gebundenen Wassers sinkt der Siedepunkt der betreffenden Bremsflüssigkeit bzw. des azeotropen Gemisches, was bei einer hohen thermischen Belastung zum Sieden der Flüssigkeit führt. Beim Sieden der Bremsflüssigkeit bzw. des azeotropen Gemisches bilden sich Gasblasen innerhalb der Bremsflüssigkeit aus, die dem für einen Bremsvorgang notwendigen Druckaufbau entgegenwirken. Bilden sich hierbei zu viele bzw. zu große Gasblasen, kann dies zu einem vollständigen Versagen der betreffenden Bremsen und somit zu verheerenden Unfällen führen. Bereits ein Massenanteil von 3% Wasser an der Bremsflüssigkeit kann zum vollständigen Versagen einer Bremsanlage führen.

Die Erfassung eines aktuellen Zustands der Bremsanlage, insbesondere die Erfassung eines aktuellen Zustands der Bremsflüssigkeit erfolgt hierbei vorzugsweise in zumindest zwei Schritten, einem ersten Schritt einer Ermittlung eines Wertes zur Aussage hinsichtlich eines aktuellen Zustands der Bremsanlage auf Basis von Messwerten sowie einem zweiten Schritt einer Bewertung des ermittelten Wertes anhand eines Vergleichs mit zumindest einem Referenzwert.

Im Rahmen des ersten Schrittes zur Ermittlung eines Wertes zur Aussage hinsichtlich eines aktuellen Zustands der Bremsanlage kann vorzugsweise ein Dampfblasenkontrollsensor innerhalb der Bremsanlage eingesetzt werden, der eine Dampfblasenbildung innerhalb der Bremsanlage schnell und empfindlich detektiert und auf dessen Basis somit eine Aussage über einen aktuellen Zustand der Bremsanlage bzw. einen aktuellen Zustand der Bremsflüssigkeit getroffen werden kann. Hierbei können alternativ oder kumulativ auch andere Sensoren innerhalb der Bremsanlage angeordnet sein, die in der Lage sind Daten zu erfassen, auf deren Grundlage eine aussagekräftige Beurteilung hinsichtlich des aktuellen Zustands der Bremsanlage bzw. der Bremsflüssigkeit möglich ist. Die einsetzbaren Sensoren können hierbei Daten aus Druckmessungen, Viskositätsmessungen, Temperaturmessungen, Drehzahlmessungen oder dergleichen erfassen. Im Hinblick auf eine besonders aussagekräftige Ermittlung von Werten zur Aussage hinsichtlich eines aktuellen Zustands einer Bremsanlage erfolgt vorteilhafterweise vor der Ermittlung eine Mittelung und/oder Gewichtung und/oder eine anders geartete Methode zur Bereinigung von Messungenauigkeiten und/oder Fehlern durch schwankende Umgebungsbedingungen und/oder Systemabhängigkeiten.

Um den auf Basis der erfassten Messwerte ermittelten Wert schließlich in einem zweiten Schritt bewerten zu können, erfolgt erfindungsgemäß vorzugsweise schließlich noch ein Vergleich der ermittelten Werte mit einem Referenzwert. Hierbei können auch die auf Basis der Sensoren ermittelten Werte vor einem Vergleich mit Referenzwerten im Hinblick auf eine aussagekräftige Bewertung noch gemittelt und/oder gewichtet werden.

Nach einer erfindungsgemäßen Erfassung eines aktuellen Zustands einer Bremsanlage erfolgt gemäß dem gegenständlichen Verfahren ein Erhöhen des Bremsdrucks in Abhängigkeit des aktuellen Zustands der elektrohydraulischen Bremsanlage. Hierbei erfolgt der Schritt der Erhöhung des Bremsdrucks vorzugsweise erst ab Überschreitung oder Unterschreitung eines gewissen Schwellenwerts. Als Schwellenwert kann hierbei beispielsweise die Abweichung des auf Basis der Sensoren ermittelten Wertes von dem Referenzwert dienen. Ist diese Abweichung zu groß, so kann gemäß dem erfindungsgemäßen Verfahren eine Erhöhung des Bremsdrucks erfolgen. Hierbei kann entweder die absolute Abweichung oder auch die relative Abweichung in Relation zum Betrag der jeweiligen gemessenen Größe verwendet werden. Eine Erhöhung des Bremsdrucks kann beispielweise mittels Pumpen, insbesondere mittels in Kraftfahrzeugen angeordneten ESC-Pumpen erfolgen.

Gemäß dem kennzeichnenden Merkmal des erfindungsgemäßen Verfahrens erfolgt die Bremsdruckerhöhung hierbei so, dass eine gezielte, zeitlich getrennt voneinander erfolgende Bremsdruckversorgung einzelner Teile der Bremsanlage erfolgt. Dies ist insbesondere im Hinblick auf die im Rahmen der Erfindung erlangten Erkenntnis sinnvoll, dass die mittels einfacher Bremsdruckerhöhung erreichte Kompensation von verlorener Bremskraft, häufig nicht schnell genug erfolgt, so dass es trotz Bremsdruckerhöhung zu Ausfällen des Bremssystems und dadurch zu schweren Unfällen kommen kann. Ein erzielbarer schnellerer Bremsdruckaufbau basiert hierbei insbesondere auf der Tatsache, dass bei einer gezielt zeitlich getrennt voneinander erfolgenden Bremsdruckversorgung - zumindest bei der Versorgung intakter Teile der Bremsanlage - keine Zeitverluste durch Druckausgleichsströme hinzunehmen sind.

Im Hinblick auf eine besonders schnelle und effektive Steuerung ist es im Rahmen des erfindungsgemäßen Verfahrens hierbei denkbar, dass der Schritt des Erhöhens des Bremsdrucks in Abhängigkeit des aktuellen Zustands der elektrohydraulischen Bremsanlage durch das Öffnen und Schließen von zentral gesteuerten elektrischen Ventilen erfolgt. Im Hinblick auf eine einfache und kostengünstige Ausführung des erfindungsgemäßen Verfahrens können hierbei vorteilhafterweise die in Kraftfahrzeugen gängiger Weise angeordneten ABS-Einlassventile und ABS-Auslassventile verwendet werden.

Im Rahmen des erfindungsgemäßen effektiven und möglichst flexibel steuerbaren Verfahrens ist vorliegend ferner vorgesehen, dass die gezielte zeitlich getrennt voneinander erfolgende Bremsdruckversorgung einzelner Teile der Bremsanlage alternierend erfolgt. Durch ein alternierendes Öffnen und Schließen können in kurzer Zeit verschiedene Teile einer Bremsanlage mit Bremsdruck versorgt werden, ohne dass Verluste durch Ausgleichsströme zu befürchten sind. Eine alternierend zeitlich getrennt voneinander erfolgende Bremsdruckversorgung einzelner Teile der Bremsanlage kann hierbei vorzugsweise durch ein alternierendes Öffnen und Schließen der ABS-Einlassventile erfolgen.

Im Hinblick auf eine zeitlich getrennte Versorgung einzelner Teile der Bremsanlage kann im Rahmen der Erfindung vorteilhafterweise ferner vorgesehen sein, dass die Vorderachse und die Hinterachse des Kraftfahrzeugs bei der Erhöhung des Bremsdrucks zeitlich getrennt voneinander mit Bremsdruck versorgt werden. Wie bereits ausgeführt, ist eine zeitlich getrennt voneinander erfolgende Versorgung einzelner Teile des Bremssystems insbesondere zur Vorbeugung von Druckverlusten durch Ausgleichsströme sinnvoll. Da erfindungsgemäß erkannt worden ist, dass bezüglich der Achsen eines Kraftfahrzeugs häufig eine ungleichmäßige Bremsbelastung vorliegt, ist es hinsichtlich einer Separierung von Teilen der Bremsanlage sinnvoll, zumindest die Vorder- und Hinterachse zeitlich getrennt voneinander mit Bremsdruck zu versorgen. Somit ist mehr Druck für ein kleineres Volumen vorhanden, was sich positiv auf die Zeit zur Erreichung des notwendigen Bremsdrucks auswirkt. Alternativ kann es auch vorgesehen sein, nur eine Seite, d.h. beispielsweise den rechten Radbremszylinder vorne und hinten oder den linken Radbremszylinder vorne und hinten oder auch nur einzelne Radbremszylinder separat mit Bremsdruck versorgen.

Im Rahmen einer besonders sicheren und gleichzeitig effizienten Ausführung des gegenständlichen Verfahrens kann ferner vorgesehen sein, dass bei Einleitung des Verfahrens zunächst nur die Hinterachse mit Bremsdruck versorgt wird, während die Vorderachse noch von der Bremsdruckversorgung getrennt ist. Dies ist insbesondere vor dem Hintergrund der im Rahmen der Erfindung erfolgten Erkenntnis sinnvoll, dass die Vorderachse von Kraftfahrzeugen in der Regel einer deutlich höheren Bremsbelastung ausgesetzt ist, als die Hinterachse. Aufgrund der höheren Bremsbelastung ist auch die thermische Belastung an der Vorderachse deutlich höher, wodurch die beschriebene Problematik der Dampfblasenbildung an der Vorderachse signifikant häufiger auftritt. Indem nun bei Einleitung des erfindungsgemäßen Verfahrens zunächst nur die Hinterachse mit Bremsdruck versorgt wird, ist in aller Regel erst einmal ein sicheres Bremsen mit den in der Regel noch intakten Radbremszylindern der Hinterachse möglich. Durch eine separate Versorgung dieser in aller Regel noch intakten Achse wird zunächst die gesamte zur Verfügung stehende Bremskraft dieser Achse zugeführt, was eine deutlich schnellere Bremsung ermöglicht. Dadurch, dass nach der Durchführung eines Bremsvorgangs mittels der Hinterachse, der gesamte zur Verfügung stehende Bremsdruck der Vorderachse zugeführt wird, ist zudem anschließend auch eine deutlich schnellere Komprimierung der in aller Regel an der Vorderachse angeordneten Dampfblasen möglich.

Vorteilhafterweise kann im Rahmen des erfindungsgemäßen Verfahrens, insbesondere bei einer alternierend erfolgenden Bremsdruckversorgung der einzelnen Teile der Bremsanlage, die Länge der Zeitintervalle, in denen einzelne Teile der Bremsanlage mit Bremsdruck versorgt werden, in Abhängigkeit der betreffenden Teile der Bremsanlage variieren. So nimmt der Aufbau des erforderlichen Bremsdrucks an der Vorderachse - im Falle von in diesem Bereich angeordneten Dampfblasen - in der Regel eine längere Zeitdauer ein, als der Aufbau des erforderlichen Bremsdrucks an der in Regel intakten Hinterachse. Daher kann erfindungsgemäß vorgesehen sein, das Zeitintervall der separaten Bremsdruckversorgung der Hinterachse kürzer, beispielsweise mit 0,5 Sekunden zu bemessen, wohingegen das Zeitintervall der separaten Bremsdruckversorgung der Vorderachse länger, beispielsweise mit 2 - 3 Sekunden bemessen werden kann.

Ebenfalls Gegenstand der Erfindung ist eine elektrohydraulische Bremsanlage mit den Merkmalen des unabhängigen Vorrichtungsanspruchs. Hierbei ist gegenständlich vorgesehen, dass die elektrohydraulische Bremsanlage ein Betätigungsmittel, wie beispielsweise ein Bremspedal und die dazugehörige Bremspedalsensorik zur Einleitung eines Bremsvorgangs sowie eine Detektionseinheit, wie beispielsweise einen Dampfblasenkontrollsensor zur Erfassung eines aktuellen Zustands der elektrohydraulischen Bremsanlage aufweist. Ferner weist die gegenständliche elektrohydraulische Bremsanlage eine Druckregelungseinheit, wie beispielsweise eine ESC-Pumpe zur Erhöhung des Bremsdrucks in Abhängigkeit des aktuellen Zustands der elektrohydraulischen Bremsanlage sowie eine Steuereinheit, wie beispielsweise eine Ventilsteuerungseinheit zur gezielten Verteilung des Bremsdrucks auf, wobei die Steuereinheit hierbei derart eingerichtet ist, dass durch diese mittels einer gezielten zeitlich getrennt voneinander erfolgenden Bremsdruckversorgung einzelner Teile der Bremsanlage, ein schnellerer Bremsdruckaufbau erfolgt. Damit bringt die erfindungsgemäße elektrohydraulische Bremsanlage die gleichen Vorteile mit sich, wie sie bereits ausführlich in Bezug auf das erfindungsgemäße Verfahren beschrieben worden sind. Die erfindungsgemäße Bremsanlage kann hierbei entweder als mobile oder zumindest teilweise mobile Anlage gebildet- oder auch in ein Kraftfahrzeug integriert sein. Um eine flexible, unkomplizierte und effiziente Kommunikation der einzelnen Komponenten der gegenständlichen Bremsanlage zu gewährleisten, können die einzelnen Komponenten vorzugsweise drahtlos auf Server- bzw. Cloud-Basis und/oder via Internet kommunizieren.

Im Hinblick auf eine besonders schnelle, empfindliche und insbesondere ortsaufgelöste Detektion von innerhalb der Bremsanlage gebildeten Gasblasen kann ferner erfindungsgemäß vorgesehen sein, dass die elektrohydraulische Bremsanlage zumindest zwei getrennt voneinander angeordnete Detektionseinheiten zur Erfassung eines aktuellen Zustands der elektrohydraulischen Bremsanlage umfasst. Hierbei ist dann vorteilhafterweise zumindest einer der beiden getrennt voneinander angeordneten Detektionseinheiten im Bereich der Vorderachse und der andere im Bereich der Hinterachse angeordnet.

Ebenfalls Gegenstand der Erfindung ist zudem ein Kraftfahrzeug umfassend eine zuvor beschriebene elektrohydraulische Bremsanlage.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
- Fig. 1: eine schematische Schaltungsanordnung einer erfindungsgemäßen elektrohydraulischen Bremsanlage,
- Fig. 2: eine schematische Darstellung der Ventilschaltvorgänge während der Ausführung des erfindungsgemäßen Verfahrens.

In den Figuren werden für die gleichen technischen Merkmale identische Bezugszeichen verwendet.

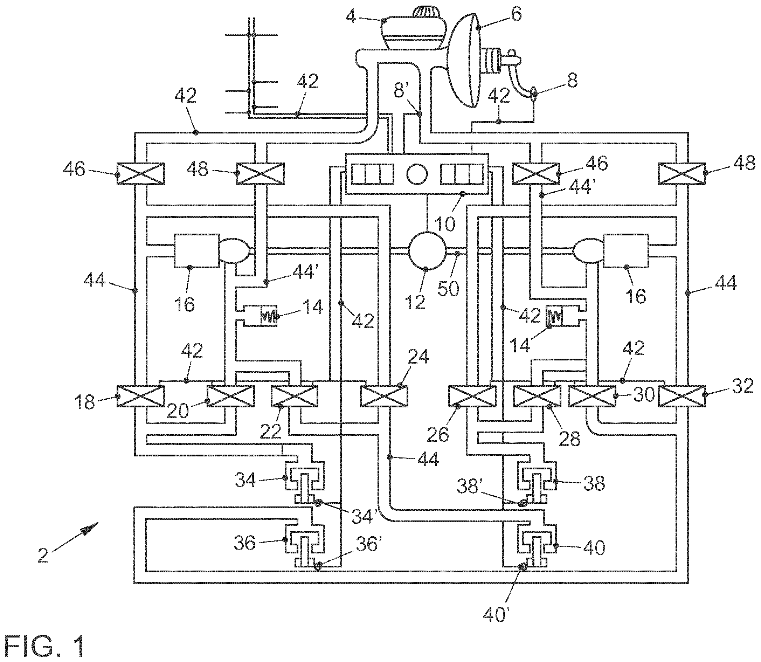

Fig. 1 zeigt eine schematische Schaltungsanordnung der gegenständlichen elektrohydraulischen Bremsanlage 2 zur Ausführung des erfindungsgemäßen Verfahrens in einem Kraftfahrzeug. Die Bremsanlage umfasst hierbei vorliegend einen mit Bremsflüssigkeit gefüllten Vorratsbehälter 4, einen Bremskraftverstärker 6 sowie eine Bremspedalsensorik 8, die mit einem hier nicht dargestellten Bremspedal bzw. einem anderen Betätigungsmittel in Verbindung steht. Ferner umfasst die Bremsanlage 2 ein Steuergerät 10 zur Steuerung des erfindungsgemäßen Verfahrens sowie eine Rückförderpumpe 12 und entsprechend über eine Druckzufuhrleitung 50 an die Rückförderpumpe 12 angeschlossene Druckspeicher 16 zur Bereitstellung des erforderlichen Bremsdrucks. Zur Steuerung des erfindungsgemäßen Verfahrens ist das Steuergerät mit den übrigen Komponenten, wie den Ventilen 18, 20, 22, 24, 26, 28, 30, 32, 46, 48, der Bremspedalsensorik 8, der Detektionseinheit 8`, den Drehzahlfühlern 34`, 36`, 38`, 40`, der Rückförderpumpe 12 und anderen Fahrzeugkomponenten über die Steuerleitung 42 verbunden.

Im Normalbetrieb der Bremsanlage 2 werden - sobald von der Bremspedalsensorik 8 ein Signal zur Auslösung eines Bremsvorgangs detektiert wird - die Schaltventile 46 sowie die Hochdruckschaltventile 48 geschlossen. Zeitgleich werden die ABS-Einlassventile 18, 24, 26 und 32 geöffnet, sodass die Radbremszylinder des Kraftfahrzeugs 34, 36, 38 und 40 bei einem initiierten Bremsvorgang über die Bremsdruckzufuhrleitung 44 von der Rückförderpumpe 12 bzw. den Druckspeichern 16 gleichermaßen mit Bremsdruck versorgt werden. Die ABS-Auslassventile 20, 22, 28 und 30 bleiben hierbei hingegen geschlossen, um den innerhalb der Bremsdruckzufuhrleitung 44 herrschenden Druck nicht über die Bremsdruckabfuhrleitung 44' wieder abzuführen. Dadurch steht jedem Reifen des Kraftfahrzeugs eine ausreichende Menge an Bremsdruck bzw. Bremskraft zur Verfügung, um einen bzw. mehrere Bremsvorgänge durchzuführen zu können, sobald ein entsprechendes Auslösesignal durch ein Bremspedal induziert und von der Bremspedalsensorik 8 registriert wird.

Bei hoher thermischer Belastung kann es jedoch in Abhängigkeit des Zustands der Bremsflüssigkeit, insbesondere in Abhängigkeit der Temperatur und der Menge des in die Bremsflüssigkeit aufgenommenen Wassers zu einem Sieden von Bremsflüssigkeit kommen. Da Bremsflüssigkeit zur Vermeidung der Aufnahme freien Wassers zwingend hygroskopisch ist und somit sehr begierig Wasser in gebundener Form aufnimmt, ist ein entsprechender Gehalt an gebundenem Wasser in Bremsflüssigkeiten nicht zu vermeiden. Durch die Aufnahme des gebundenen Wassers sinkt der Siedepunkt der betreffenden Bremsflüssigkeit, was zu dem erwähnten Siedevorgang führt. Beim Sieden der Bremsflüssigkeit bilden sich Gasblasen innerhalb der Bremsflüssigkeit aus, die dem für einen Bremsvorgang notwendigen Druckaufbau entgegenwirken. Bilden sich hierbei zu viele bzw. zu große Gasblasen, kann dies zu einem vollständigen Versagen der betreffenden Bremsen und somit zu verheerenden Unfällen führen.

Um dem entgegenzuwirken weist die erfindungsgemäße Bremsanlage 2 zumindest eine Detektionseinheit 8' zur Detektion von innerhalb der Bremsflüssigkeit vorhanden Gasblasen auf. Vorteilhafterweise können auch mehrere dieser Detektionseinheiten 8' innerhalb der Bremsanlage, insbesondere in der Nähe der Radbremszylinder 34, 36, 38 oder 40 angeordnet sein, um eine besonders schnelle und ortsaufgelöste Detektion solcher Dampfblasen zu ermöglichen. Hierbei kann die Detektionseinheit 8' die Anwesenheit von Gasblasen in der Bremsflüssigkeit auf verschiedene Weisen, beispielsweise anhand einer Druckmessung, einer Viskositätsmessung einer Temperaturmessung oder dergleichen detektieren.

Bei der Ausführung des erfindungsgemäßen Verfahrens werden nun zunächst die an der Vorderachse des Kraftfahrzeugs angeordneten, während eines Normalbetriebs geöffneten ABS-Einlassventile 18 und 26 für ein bestimmtes Zeitintervall geschlossen. Während dieser Dauer steht der innerhalb der Bremsanlage 2 vorhandene Bremsdruck somit nur den an der Hinterachse des Kraftfahrzeugs angeordneten Radbremszylindern 36 und 40 zur Verfügung. Das ist insbesondere im Hinblick auf die Erkenntnis sinnvoll, dass eine detektierte Dampfblasenbildung in der Großzahl aller Fälle an der Vorderachse entsteht. Somit kann der zur Verfügung stehende Bremsdruck zunächst nur der Hinterachse zur Verfügung gestellt werden. Hierdurch kann ein ungewollter Druckausgleich zwischen Teilen der an der Vorderachse und Teilen der an Hinterachse angeordneten Bremsdruckzufuhrleitung 44 vermieden werden, wodurch zunächst ein sicheres Bremsen über die an der Hinterachse angeordneten Radbremszylinder 36 und 40 gewährleistet wird.

Nach der beschriebenen Bremsdruckversorgung der Hinterachse für ein gewisses Zeitintervall ist nun erfindungsgemäß vorgesehen, die ABS-Einlassventile 18 und 26 zu öffnen und zeitgleich die ABS-Einlassventile 24 und 32 zu schließen, so dass der gesamte zur Verfügung stehende Bremsdruck nun ausschließlich der Vorderachse zur Verfügung gestellt wird. Auf diese Weise kann wiederum ein ungewollter Druckausgleich zwischen Teilen der an der Vorderachse und Teilen der an der Hinterachse angeordneten Bremsdruckzufuhrleitung 44 vermieden werden, wodurch in dem Fall von im Bereich der Vorderachse vorhandenen Gasblasen eine deutlich bessere und effektivere Komprimierung der Gasblasen erfolgt, was somit eine deutliche Verbesserung der Bremswirkung zur Folge hat.

Nach der nun ebenfalls erfolgten separaten Bremsdruckversorgung der Vorderachse für ein gewisses Zeitintervall werden vorliegend nun wieder die ABS-Einlassventile 18 und 26 geschlossen und die ABS-Einlassventile 24 und 32 geöffnet, so dass der gesamte vorhandene Bremsdruck nun wieder ausschließlich der Hinterachse zur Verfügung gestellt wird.

Diese alternierend ausgeführte separate Bremsdruckversorgung von Vorder- und Hinterachse kann beliebig oft wiederholt werden. Auf diese Weise ist nicht nur eine schnellere und effektivere Komprimierung von innerhalb der Bremsflüssigkeit angeordneten Gasblasen möglich, sondern es wird insbesondere auch ein schnellerer Aufbau des für einen Bremsvorgang erforderlichen Bremsdrucks erreicht, wenn dieser durch die Bildung von Gasblasen innerhalb der Bremsflüssigkeit sinkt, so dass das vorliegende Verfahren die Sicherheit von Bremsanlagen signifikant verbessert.

Neben der vorliegend vorgesehenen separierten Zuführung von Bremsdruck zur Vorder- bzw. Hinterachse ist es anhand des erfindungsgemäßen Aufbaus ferner ebenfalls möglich, nur die auf einer Seite des Kraftfahrzeugs angeordneten Radbremszylinder 34 und 36 oder 38 und 40 oder auch einzelne Radbremszylinder 34, 36, 38 oder 40 separat mit Bremsdruck zu versorgen.

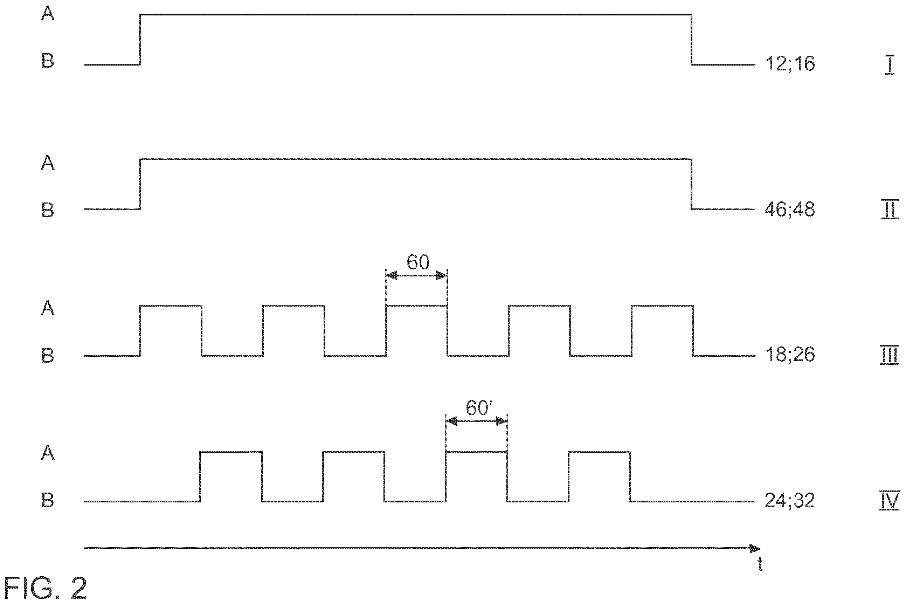

Fig. 2 zeigt eine schematische Darstellung der Ventilschaltvorgänge während der Ausführung des erfindungsgemäßen Verfahrens. Hierbei wird in einem ersten Schaltvorgang (I) die Rückförderpumpe 12 sowie der Druckspeicher 16 von einem ausgeschalteten Zustand (B) in einen eingeschalteten Zustand (A) versetzt. Zur gleichen Zeit werden in einem weiteren Schaltvorgang (II) die Schaltventile 46 und die Hochdruckschaltventile 48 durch das Anlegen einer Spannung geschlossen. In den weiteren beiden in Fig. 2 dargestellten Schaltvorgängen III und IV sind die Schaltvorgänge der an der Vorderachse angeordneten ABS-Einlassventile (18, 26) sowie die Schaltvorgänge der an der Hinterachse angeordneten ABS-Einlassventile (24, 32) dargestellt. Hierbei werden zeitlich betrachtet bei angeschalteter Rückförderpumpe 12 und geöffnetem Druckspeicher 16 sowie geschlossenen Ventilen 46 und 48, zunächst die an der Vorderachse angeordneten ABS-Einlassventile geschlossen, indem eine entsprechende Ventilspannung angelegt wird (Zustand B zu Zustand A). Während dieses ersten Zeitintervalls 60 wird der gesamte vorhandene Bremsdruck nun den an der Hinterachse angeordneten Radbremszylindern 36, 40 zur Verfügung gestellt, wodurch - wie bereits beschrieben - ein ungewollter Druckausgleich zwischen Teilen der an der Vorderachse und Teilen der an Hinterachse angeordneten Bremsdruckzufuhrleitung 44 vermieden wird und sofern an der Hinterachse keine Dampfblasen vorhanden sind zunächst ein sicheres Bremsen über die an der Hinterachse angeordneten Radbremszylinder 36 und 40 gewährleistet wird.

Erst mit dem Schließen der an der Hinterachse angeordneten ABS-Einlassventile 24 und 32 (erster Schaltvorgang gemäß IV) durch das Anlegen der entsprechenden Ventilspannung werden die an der Vorderachse angeordneten ABS-Einlassventile 18 und 26 durch eine entsprechende Rückführung der Steuerspannung geöffnet, sodass während des Zeitintervalls 60' der gesamte vorhandene Bremsdruck nun den an der Vorderachse angeordneten Radbremszylindern 34, 38 zur Verfügung steht. Dieser Vorgang wird wie vorliegend dargestellt mehrfach wiederholt. Durch ein solches alternierendes Öffnen und Schließen der ABS-Einlassventile der Vorder- und Hinterachse wird somit eine separierte Bremsdruckversorgung gewährleistet. Die vorliegend gleich groß dargestellten Zeitintervalle können zeitlich hierbei sowohl innerhalb der einzelnen Achsen, als auch zwischen den Achsen variieren. So wird im Falle einer Dampfblasendetektion im Bereich der Vorderachse das Zeitintervall 60 zur separaten Versorgung der Hinterachse in der Regel kleiner, vorzugsweise ca. 0,5 Sekunden betragen, wohingegen das Zeitintervall 60' zur separaten Versorgung der Vorderachse aufgrund der aufzuwendenden Zeit zur Komprimierung der Dampfblasen in der Regel etwas größer sein wird und vorzugsweise ca. 2 - 3 Sekunden beträgt.

### Bezugszeichenliste

- 2: Elektrohydraulische Bremsanlage
- 4: Vorratsbehälter
- 6: Bremskraftverstärker
- 8: Bremspedalsensorik
- 8`: Detektionseinheit
- 10: Steuergerät
- 12: Rückförderpumpe
- 14: Dämpfungskammer
- 16: Druckspeicher
- 18: ABS-Einlassventil vorne links
- 20: ABS-Auslassventil vorne links
- 22: ABS-Auslassventil hinten rechts
- 24: ABS-Einlassventil hinten rechts
- 26: ABS-Einlassventil vorne rechts
- 28: ABS-Auslassventil vorne rechts
- 30: ABS-Auslassventil hinten links
- 32: ABS-Einlassventil hinten links
- 34: Radbremszylinder vorne links
- 34': Drehzahlfühler vorne links
- 36: Radbremszylinder hinten links
- 36': Drehzahlfühler hinten links
- 38: Radbremszylinder vorne rechts
- 38': Drehzahlfühler vorne rechts
- 40: Radbremszylinder hinten rechts
- 40': Drehzahlfühler hinten rechts
- 42: Steuerleitung
- 44: Bremsdruckzufuhrleitung
- 44': Bremsdruckabfuhrleitung
- 46: Schaltventil
- 48: Hochdruckschaltventil
- 50: Druckzufuhrleitung
- 60: Schaltzeitintervall

## Patentansprüche

1. Verfahren zur Steuerung der Bremskraft in einer elektrohydraulischen Bremsanlage (2) eines Kraftfahrzeugs, umfassend die Schritte:
a) Einleiten eines Bremsvorgangs,
b) Erfassen eines aktuellen Zustands der elektrohydraulischen Bremsanlage (2),
c) Erhöhen des Bremsdrucks in Abhängigkeit des aktuellen Zustands der elektrohydraulischen Bremsanlage (2),
**dadurch gekennzeichnet,**
**dass** eine gezielte zeitlich getrennt voneinander erfolgende Bremsdruckversorgung einzelner Teile der Bremsanlage (2) erfolgt,
wobei die gezielte zeitlich getrennt voneinander erfolgende Bremsdruckversorgung einzelner Teile der Bremsanlage (2) alternierend erfolgt.

2. Verfahren nach Anspruch 1,
**dadurch gekennzeichnet,**
**dass** der Schritt des Einleitens eines Bremsvorgangs durch die Betätigung eines Bremspedals initiiert wird.

3. Verfahren nach Anspruch 1 oder 2,
**dadurch gekennzeichnet,**
**dass** der Schritt des Erfassens eines aktuellen Zustands der elektrohydraulischen Bremsanlage (2) im Hinblick auf den aktuellen Zustand der in der Bremsanlage (2) eingesetzten Bremsflüssigkeit erfolgt.

4. Verfahren nach einem der vorangehenden Ansprüche,
**dadurch gekennzeichnet,**
**dass** der Schritt des Erhöhens des Bremsdrucks in Abhängigkeit des aktuellen Zustands der elektrohydraulischen Bremsanlage (2) durch das Öffnen und Schließen von zentral gesteuerten elektrischen Ventilen (18, 24, 26, 32) erfolgt.

5. Verfahren nach einem der vorangehenden Ansprüche,
**dadurch gekennzeichnet,**
**dass** die Vorderachse und die Hinterachse des Kraftfahrzeugs bei der Erhöhung des Bremsdrucks zeitlich getrennt voneinander mit Bremsdruck versorgt werden.

6. Verfahren nach einem der vorangehenden Ansprüche,
**dadurch gekennzeichnet,**
**dass** bei Einleitung des Verfahrens zunächst nur die Hinterachse mit Bremsdruck versorgt wird, während die Vorderachse noch von der Bremsdruckversorgung (12, 16) getrennt ist.

7. Verfahren nach einem der vorangehenden Ansprüche,
**dadurch gekennzeichnet,**
**dass** die Länge der Zeitintervalle (60) in denen einzelne Teile der Bremsanlage (2) mit Bremsdruck versorgt werden, in Abhängigkeit der betreffenden Teile der Bremsanlage (2) variieren.

8. Elektrohydraulische Bremsanlage (2),
a) umfassend ein Betätigungsmittel (6, 8) zur Einleitung eines Bremsvorgangs,
b) eine Detektionseinheit (8') zur Erfassung eines aktuellen Zustands der elektrohydraulischen Bremsanlage (2),
c) eine Druckregelungseinheit (12, 16) zur Erhöhung des Bremsdrucks in Abhängigkeit des aktuellen Zustands der elektrohydraulischen Bremsanlage (2),
d) eine Steuereinheit (10) zur gezielten Verteilung des Bremsdrucks, die eingerichtet ist, ein Verfahren nach einem der vorangehenden Ansprüche durchzuführen.

9. Elektrohydraulische Bremsanlage nach Anspruch 8,
**dadurch gekennzeichnet,**
**dass** die Bremsanlage (2) zumindest zwei getrennt voneinander angeordnete Detektionseinheiten (8') zur Erfassung eines aktuellen Zustands der elektrohydraulischen Bremsanlage (2) umfasst.

10. Kraftfahrzeug umfassend eine elektrohydraulische Bremsanlage (2) nach einem der Ansprüche 8 oder 9.

## Claims

1. Method for controlling the brake force in an electrohydraulic brake system (2) of a motor vehicle, comprising the steps:
a) initiating a brake operation,
b) detecting a current state of the electrohydraulic brake system (2),
c) increasing the brake pressure in a manner which is dependent on the current state of the electrohydraulic brake system (2),
**characterized**
**in that** a targeted brake pressure supply, taking place at different times from one another, of individual parts of the brake system (2) takes place,
wherein the targeted brake pressure supply, taking place at different times from one another, of individual parts of the brake system (2) takes place in an alternating manner.

2. Method according to Claim 1,
**characterized**
**in that** the step of initiating a brake operation is initiated by way of the actuation of a brake pedal.

3. Method according to Claim 1 or 2,
**characterized**
**in that** the step of detecting a current state of the electrohydraulic brake system (2) takes place with regard to the current state of the brake fluid which is used in the brake system (2).

4. Method according to one of the preceding claims,
**characterized**
**in that** the step of increasing the brake pressure takes place in a manner which is dependent on the current state of the electrohydraulic brake system (2) by way of opening and closing centrally controlled electric valves (18, 24, 26, 32).

5. Method according to one of the preceding claims,
**characterized**
**in that** the front axle and the rear axle of the motor vehicle are supplied with brake pressure at different times from one another during the increase of the brake pressure.

6. Method according to one of the preceding claims,
**characterized**
**in that**, in the case of the method being initiated, first of all only the rear axle is supplied with brake pressure while the front axle is still disconnected from the brake pressure supply (12, 16).

7. Method according to one of the preceding claims,
**characterized**
**in that** the length of the time intervals (60), in which individual parts of the brake system (2) are supplied with brake pressure, vary in a manner which is dependent on the relative parts of the brake system (2).

8. Electrohydraulic brake system (2),
a) comprising an actuating means (6, 8) for initiating a brake operation,
b) a detection unit (8') for detecting a current state of the electrohydraulic brake system (2),
c) a pressure regulation unit (12, 16) for increasing the brake pressure in a manner which is dependent on the current state of the electrohydraulic brake system (2),
d) a control unit (10) for the targeted distribution of the brake pressure, which control unit is configured to carry out a method according to one of the preceding claims.

9. Electrohydraulic brake system according to Claim 8, **characterized**
**in that** the brake system (2) comprises at least two detection units (8') which are arranged separately from one another for detecting a current state of the electrohydraulic brake system (2).

10. Motor vehicle comprising an electrohydraulic brake system (2) according to either of Claims 8 or 9.

## Revendications

1. Procédé permettant de commander la force de freinage dans un système de freinage électrohydraulique (2) d'un véhicule automobile, comprenant les étapes consistant à :
a) amorcer une action de freinage,
b) détecter un état actuel du système de freinage électrohydraulique (2),
c) augmenter la pression de freinage en fonction de l'état actuel du système de freinage électrohydraulique (2),
**caractérisé en ce qu'**une alimentation en pression de freinage ciblée, réalisée de manière séparée dans le temps, de différentes parties du système de freinage (2) est effectuée,
dans lequel l'alimentation en pression de freinage ciblée, réalisée de manière séparée dans le temps, de différentes parties du système de freinage (2) est effectuée en alternance.

2. Procédé selon la revendication 1, **caractérisé en ce que** l'étape de l'amorçage d'une action de freinage est initiée par l'actionnement d'une pédale de frein.

3. Procédé selon la revendication 1 ou 2, **caractérisé en ce que** l'étape de la détection d'un état actuel du système de freinage électrohydraulique (2) est effectuée en vue de l'état actuel du liquide de frein mis en œuvre dans le système de freinage (2).

4. Procédé selon l'une quelconque des revendications précédentes, **caractérisé en ce que** l'étape de l'augmentation de la pression de freinage est effectuée en fonction de l'état actuel du système de freinage électrohydraulique (2) par l'ouverture et la fermeture de soupapes électriques (18, 24, 26, 32) commandées de manière centralisée.

5. Procédé selon l'une quelconque des revendications précédentes, **caractérisé en ce que** l'essieu avant et l'essieu arrière du véhicule automobile sont alimentés en pression de freinage de manière séparée dans le temps lors de l'augmentation de la pression de freinage.

6. Procédé selon l'une quelconque des revendications précédentes, **caractérisé en ce que** lors de l'amorçage du procédé, d'abord seul l'essieu arrière est alimenté en pression de freinage tandis que l'essieu avant est toujours séparé de l'alimentation en pression de freinage (12, 16).

7. Procédé selon l'une quelconque des revendications précédentes, **caractérisé en ce que** la longueur des intervalles de temps (60) dans lesquels différentes parties du système de freinage (2) sont alimentées en pression de freinage varie en fonction des parties concernées du système de freinage (2).

8. Système de freinage électrohydraulique (2), comprenant
a) un moyen d'actionnement (6, 8) pour amorcer une action de freinage,
b) une unité de détection (8') pour détecter un état actuel du système de freinage électrohydraulique (2),
c) une unité de régulation de pression (12, 16) pour augmenter la pression de freinage en fonction de l'état actuel du système de freinage électrohydraulique (2),
d) une unité de commande (10) pour la répartition ciblée de la pression de freinage, qui est conçue pour exécuter un procédé selon l'une quelconque des revendications précédentes.

9. Système de freinage électrohydraulique selon la revendication 8, **caractérisé en ce que** le système de freinage (2) comprend au moins deux unités de détection (8') disposées séparément l'une de l'autre pour détecter un état actuel du système de freinage électrohydraulique (2).

10. Véhicule automobile, comprenant un système de freinage électrohydraulique (2) selon l'une quelconque des revendications 8 ou 9.
